# EUROPEAN PATENT SPECIFICATION

(11) **EP 4 119 287 B1**
(45) Date of publication and mention of the grant of the patent: **20.03.2024**
(21) Application number: 22177947.3
(22) Date of filing: 08.06.2022
(51) Int. Cl.: B27C 5/00, B27C 5/06

(54) **MACHINING CENTER PROVIDED WITH A MAGAZINE OF EQUIPMENT FOR RETAINING THE PIECES TO BE MACHINED AND WITH MOVABLE BARS FOR MOVING AND/OR CONFIGURING SAID EQUIPMENT FOR RETAINING THE PIECES**
BEARBEITUNGSZENTRUM MIT EINEM AUSRÜSTUNGSMAGAZIN ZUM HALTEN DER ZU BEARBEITENDEN TEILE UND MIT BEWEGLICHEN STANGEN ZUM BEWEGEN UND/ODER KONFIGURIEREN DER VORRICHTUNG ZUM HALTEN DER TEILE
CENTRE D'USINAGE DOTÉ D'UN MAGASIN D'ÉQUIPEMENTS POUR RETENIR LES PIÈCES À USINER ET DE BARRES MOBILES POUR DÉPLACER ET/OU CONFIGURER LESDITS ÉQUIPEMENTS POUR RETENIR LES PIÈCES

(30) Priority: 13.07.2021 IT 202100018461
(43) Date of publication of application: 18.01.2023
(73) Proprietor: Working Process S.r.l., 29029 Rivergaro, (PC) (IT)
(72) Inventor: SCHIAVETTA, Massimo, 29029 Rivergaro, Piacenza (IT)
(74) Representative: Mitola, Marco

(56) References cited:
- EP-A2- 1 728 594
- DE-C1- 4 444 339
- US-A1- 2003 150 240

## Description

### FIELD OF APPLICATION

This invention relates to a machining center provided with a magazine of equipment for retaining the pieces to be machined and with movable bars for moving and/or configuring said equipment for retaining the pieces.

### PRIOR ART

With traditional machines, each time the product is changed, the operator has to spend time and particular attention on retooling the work surface, i.e. repositioning the equipment for retaining the workpiece (for example suction cups or clamps), or replacing these when different shapes or heights are required.

This equipment aims to hold the blank firm while the operating heads machine it: for this reason, each detail of this equipment has to be studied, positioned and configured carefully, as it will determine the correct production of the workpiece.

In the machining center solutions of the prior art, the operator has to manually carry out retooling of the work surface each time, depending on the batch of pieces to be machined. For example, patent Document DE 44 44 339 C1 discloses a machining center suitable for machining wooden pieces comprising: at least one machine head equipped with at least one tool suitable for performing mechanical machining on said pieces, and movable bars for supporting, moving and positioning retention equipment of the pieces according to the geometry and size of the workpieces to be machined, said movable bars extending along prevailing longitudinal directions. In said known machining center the retention equipment can be moved by an actuator but cannot be removed from or loaded to them.

As a result, the machining center requires very long tooling times and is therefore not very versatile for machining batches of different pieces.

For all of these reasons, the machining centers of the prior art are not versatile and require significant tooling times and costs.

### DISCLOSURE OF THE INVENTION

There is therefore a need to resolve the disadvantages and limitations mentioned with reference to the prior art.

This need is satisfied by a machining center according to claim 1.

### DESCRIPTION OF THE DRAWINGS

Further features and advantages of this invention will become clearer from the following detailed description of preferred non-limiting embodiments thereof, in which:

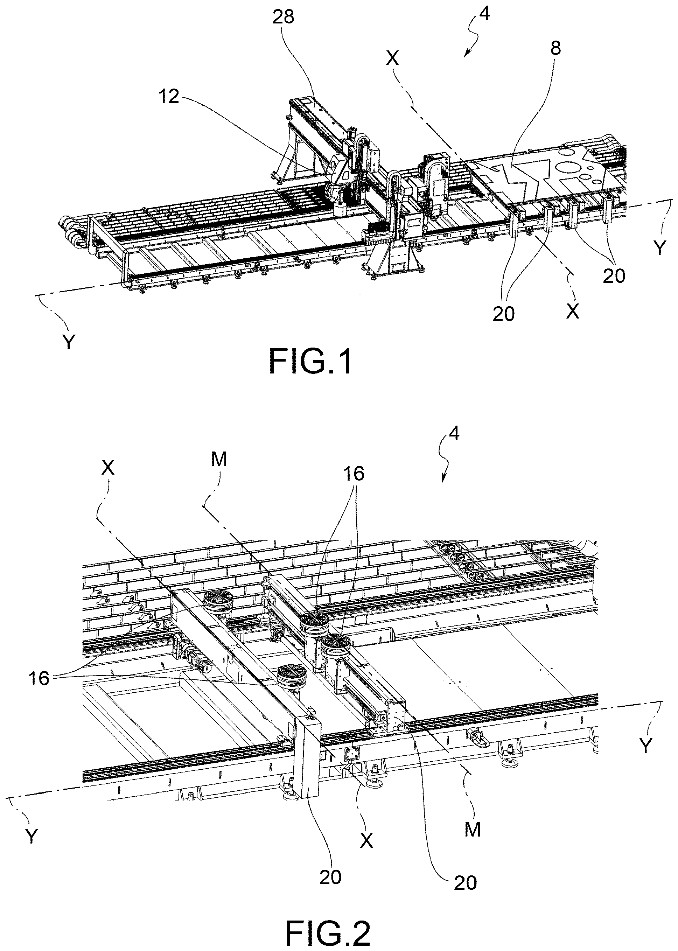

Fig. 1 is a perspective view of a machining center according to an embodiment of this invention;
Fig. 2 is a perspective view of a particular detail of the machining center from Fig. 1, in which two movable bars are spaced apart from each other;

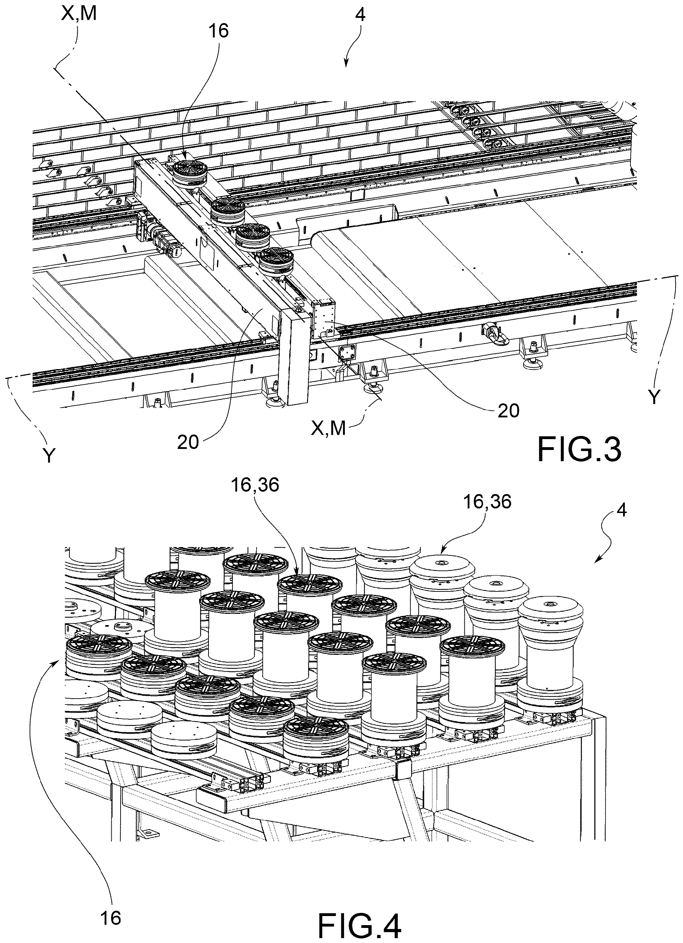

Fig. 3 shows the detail from Fig. 2, in which the two movable bars are placed side by side, with the respective equipment for retaining pieces arranged therebetween;
Fig. 4 is a perspective view of retention equipment according to this invention;

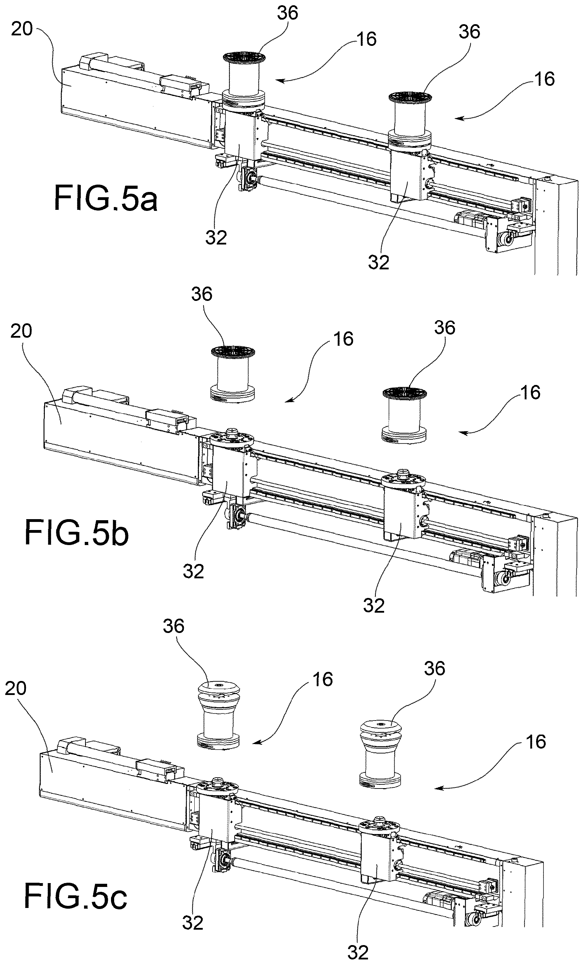

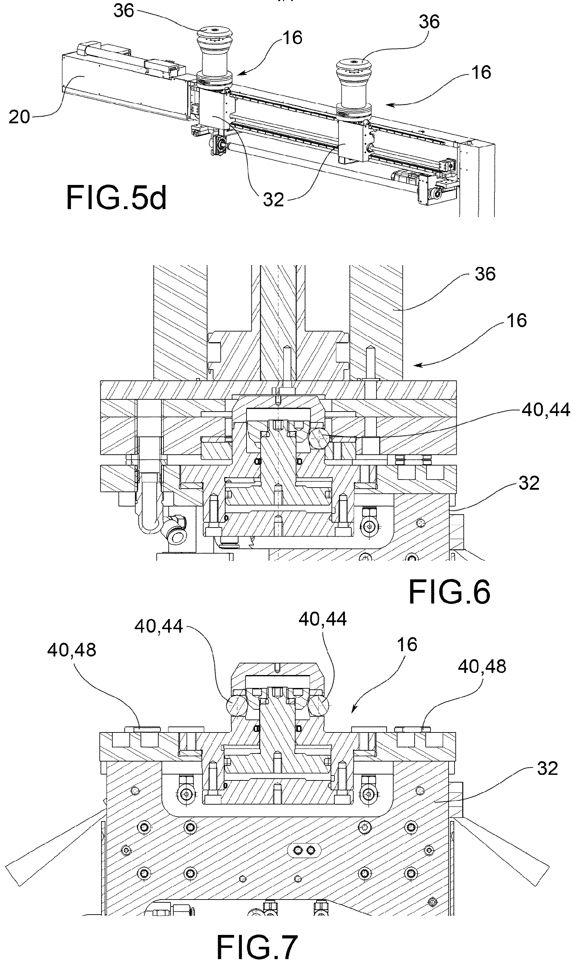

Fig. 5a, 5b, 5c and 5d are perspective views of a movable bar in different configurations for mounting possible equipment for retaining pieces;

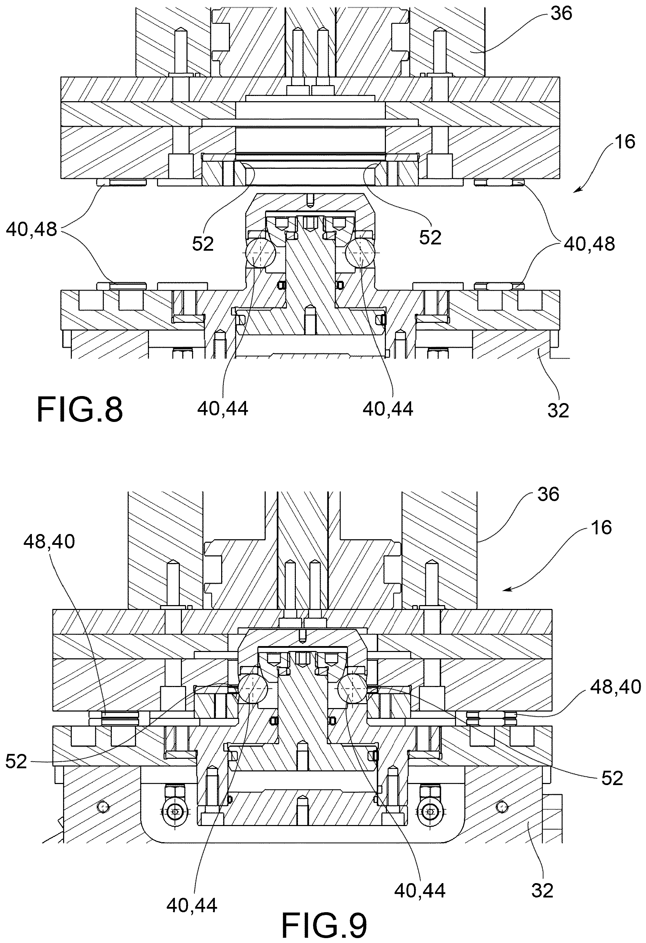

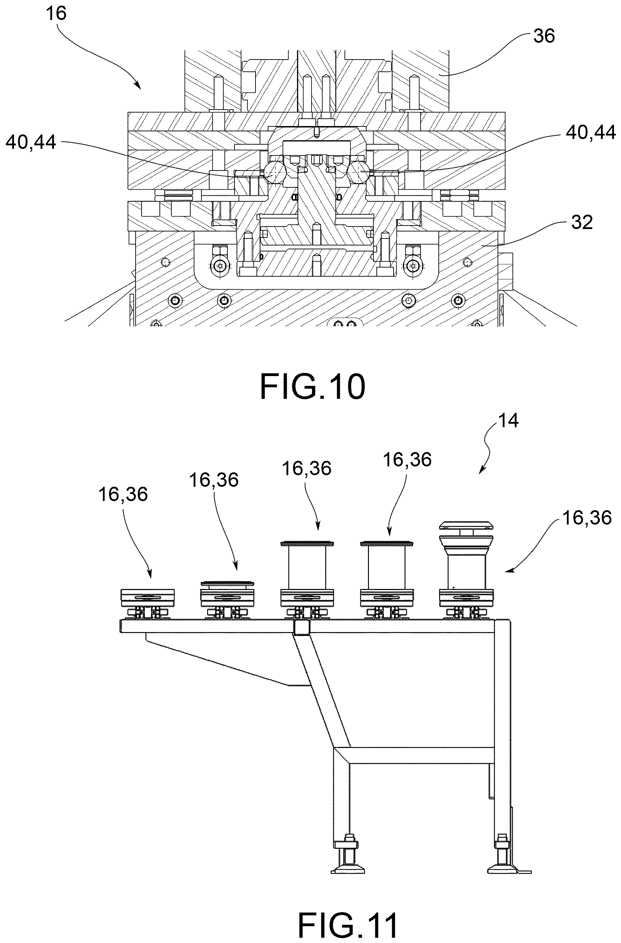

Fig. 6-10 are various sectional views, in a separated and/or assembled configuration according to a relative clamping sequence, of retention equipment according to this invention;
Fig. 11 is a lateral view of a magazine of retention equipment according to this invention;

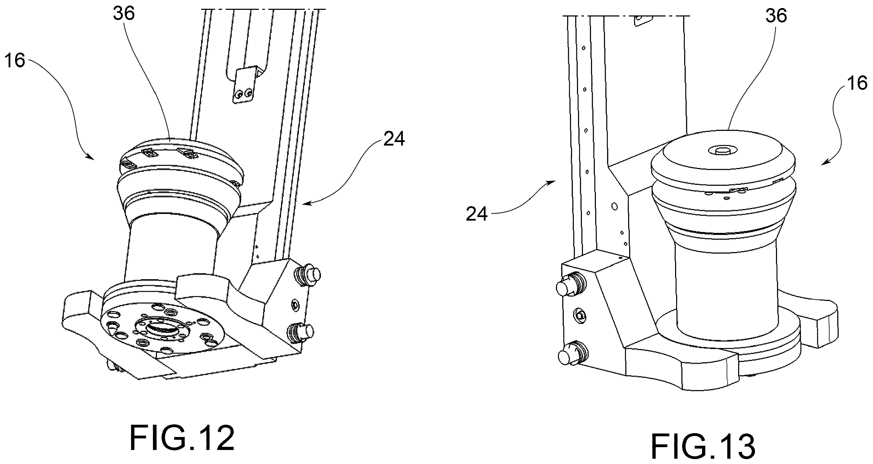

Fig. 12-13 are perspective views, from different angles, of a tooling head which moves retention equipment, according to a possible embodiment of this invention.

Elements or parts of elements common to the embodiments described hereinafter will be indicated with the same reference signs.

### DETAILED DESCRIPTION

With reference to the aforementioned figures, reference sign 4 is used to denote, as a whole, a machining center for machining pieces 8, preferably wooden pieces.

The machining center 4 comprises at least one machine head 12 equipped with at least one tool suitable for performing mechanical machining on said pieces 8.

The machining center 4 also comprises a magazine 14 of equipment 16 for retaining the pieces 8 during the machining thereof by said at least one machine head 12, as well as movable bars 20 for supporting, moving and positioning said equipment 16 for retaining the pieces 8 according to the geometry and size of the pieces 8 to be machined.

The movable bars 20 extend along prevailing longitudinal directions X-X, in parallel with each other.

The machining center 4 also comprises at least one tooling head 24 which is configured to be able to pick up said retention equipment 16 and join it to said movable bars 20, and which is configured to feed the pieces 8 to be machined to said retention equipment 16.

According to one possible embodiment, the tooling head 24 is supported by a mobile gantry structure 28.

The retention equipment 16 is preferably provided with drive means with respect to the associable movable bars 20, so as to be able to translate along said prevailing longitudinal directions X-X.

Moreover, said movable bars 20 are provided with individual and mutually independent drive means, so as to be able to translate along transverse directions Y-Y which are perpendicular to said prevailing longitudinal directions X-X.

The retention equipment 16 is preferably off-center with respect to a centerline M-M of the movable bars 20, which centerline is parallel to said prevailing longitudinal directions X-X.

According to one embodiment, the retention equipment 16 is at least partially cantilevered from the movable bars 20, along transverse directions Y-Y which are perpendicular to said prevailing longitudinal directions X-X.

For example, the retention equipment comprises at least one suction cup of different shapes and heights (for machining panels) and/or at least one vice (for machining solid wood) and/or at least one nesting plate (for machining panels) and/or at least one end cap.

According to one embodiment, the retention equipment 16 comprises a carriage 32 which is associated with the related movable bar 20, and an interchangeable portion 36 which is detachably associated with the carriage 32 and configured to clamp a type of piece 8 to be machined.

The carriage 32 and the interchangeable portion 36 are connected to each other by mechanical and pneumatic connection means 40. It is also possible to provide electromagnetic and/or hydraulic connection means for the connection between the carriage 32 and the interchangeable portion 36.

The carriage 32 is in turn provided with drive means with respect to the associable movable bars 20: in this way, it is possible to move the carriage 32, and therefore the entire retention equipment, along the movable bar 20, i.e. parallel to the prevailing longitudinal direction X-X.

According to one possible embodiment, the mechanical and pneumatic connection means 40 comprise a plurality of balls 44 and calibrated support points 48 configured to provide proper mechanical centering and a pneumatic connection between the carriage 32 and the interchangeable portion 36.

The mechanical and pneumatic connection means 40 are preferably connected to a compressed air source of the machining center 4, so as to push said balls 44 against an inclined surface 52 which is clamped against the calibrated support planes 48.

The mechanical and pneumatic connection means 40 preferably comprise pneumatic/vacuum connection points so as to connect pneumatic and vacuum utilities of the carriage 32 to the interchangeable portions 36.

Said pneumatic/vacuum connection points are made of rubber.

According to one possible embodiment, the mechanical and pneumatic connection means 40 comprise an interchangeable portion presence sensor.

As may be appreciated from what has been described, this invention overcomes the disadvantages of the prior art.

The machining center for machining wooden pieces according to the invention is primarily distinguished from the known solutions on account of the machining precision, flexibility, and the high degree of autonomy in machining and machine reconfiguration, without the need for operator intervention.

The machining center may machine both panels (made of various materials) and linear elements made of solid wood, as is typical in the sector of window and door manufacturers.

Advantageously, this invention substantially differs from the solutions present on the market today in that it is able to provide extreme flexibility for positioning the equipment that holds the piece to be machined. This translates into maximum freedom for the user to produce objects with articulated shapes, or to better clamp the pieces during machining.

Each of the movable bars carries a plurality of items of equipment for retaining the pieces, which equipment, unlike the known solutions, is off-center with respect to the axis of the movable bar.

In this way, when the operator so requires, it is possible to reduce the positioning distance between centers so as to bring all of the retention equipment, supported by two adjacent movable bars, to the same retention line of the piece.

This configuration is extremely versatile, and it is not possible to obtain this configuration from the solutions of the prior art.

Moreover, as seen, each movable bar is powered individually and is independent from all of the other bars, which gives great versatility on machining cycles; this is all to the advantage of flexibility, as well as the ability to move freely on both sides of the gantry with the operating heads.

In order to guarantee that the machine has high flexibility, the retention equipment is supported by mechanical and pneumatic connection means which are powered individually and preferably mounted in pairs on independent bars. This allows the user to position the supports where they are most useful, in order to produce the finished pieces. In order to make the whole assembly automatic, therefore, in addition to motorizing everything, compressed air and vacuum connections are also provided on each clamp in order to allow the retention equipment to operate.

A person skilled in the art, in order to satisfy contingent and specific needs, may make numerous modifications and variations to the solutions described above.

The scope of protection of this invention is defined by the following claims.

## Claims

1. Machining center (4) for machining wooden pieces (8) comprising:
- at least one machine head (12) equipped with at least one tool suitable for performing mechanical machining on said pieces (8),
- a magazine (14) of retention equipment (16) of the pieces (8) during the machining thereof by said at least one machine head (12),
- movable bars (20) for supporting, moving and positioning said retention equipment (16) of the pieces (8) according to the geometry and size of the workpieces (8) to be machined, said movable bars (20) extending along prevailing longitudinal directions (X-X),
- retention equipment (16),
- at least one tooling head (24) configured to be able to pick up said retention equipment (16) and join it to said movable bars (20) and configured to feed pieces (8) to be machined to said retention equipment (16).

2. The machining center (4) according to claim 1, wherein said tooling head (24) is supported by a mobile gantry structure (28).

3. The machining center (4) according to claim 1 or 2, wherein said retention equipment (16) is provided with drive means with respect to the associable movable bars (20), so as to be able to translate along said prevailing longitudinal directions (X-X).

4. The machining center (4) according to any of the claims from 1 to 3, wherein said movable bars (20) are provided with individual and mutually independent drive means, so as to be able to translate along transverse directions (Y-Y), perpendicular to said prevailing longitudinal directions (X-X).

5. The machining center (4) according to any of the claims from 1 to 4, wherein the retention equipment (16) is off-center with respect to a centerline (M-M) of the movable bars (20), parallel to said prevailing longitudinal directions (X-X).

6. The machining center (4) according to any of the claims from 1 to 5, wherein the retention equipment (16) is at least partially cantilevered from the movable bars (20), along transverse directions (Y-Y), perpendicular to said prevailing longitudinal directions (X-X).

7. The machining center (4) according to any of the claims, wherein the retention equipment (16) comprises at least one suction cup of different shapes and heights and/or at least one vice and/or at least one nesting plate and/or at least one end cap.

8. The machining center (4) according to any of the claims from 1 to 7, wherein the retention equipment (16) comprises a carriage (32), associated with a related movable bar (20), and an interchangeable portion (36), detachably associated with the carriage (32) and configured to clamp a type of piece (8) to be machined, said carriage (32) and said interchangeable portion (36) being connected to each other by mechanical and pneumatic connection means (40).

9. The machining center (4) according to claim 8, wherein the carriage (32) is provided with drive means with respect to the associable movable bars (20).

10. The machining center (4) according to any of the claims from 8 to 9, wherein the mechanical and pneumatic connection means (40) comprise a plurality of balls (44) and calibrated support points (48) configured to provide proper mechanical centering and pneumatic connection between the carriage (32) and the interchangeable portion (36).

11. The machining center (4) according to any of the claims from 8 to 10, wherein the mechanical and pneumatic connection means (40) are connected to a compressed air source of the machining center (4), so as to push said balls (44) against an inclined surface (52) which is clamped against the calibrated support planes (48).

12. The machining center (4) according to any of the claims from 8 to 11, wherein the mechanical and pneumatic connection means (40) comprise pneumatic/vacuum connection points so as to connect pneumatic and vacuum utilities of the carriage (32) to the interchangeable portions (36).

13. The machining center (4) according to claim 12, wherein said pneumatic/vacuum connection points are made of rubber.

14. The machining center (4) according to any of the claims from 8 to 13, wherein the mechanical and pneumatic connection means (40) comprise an interchangeable portion presence sensor (36).

## Patentansprüche

1. Bearbeitungszentrum (4) zum Bearbeiten von Holzstücken (8), umfassend:
- zumindest einen Maschinenkopf (12), der mit zumindest einem Werkzeug ausgestattet ist, das zum Durchführen einer mechanischen Bearbeitung der Stücke (8) geeignet ist,
- ein Magazin (14) mit Rückhalteausrüstung (16) für die Stücke (8) während ihrer Bearbeitung durch den zumindest einen Maschinenkopf (12),
- bewegliche Stangen (20) zum Stützen bzw. Tragen, Bewegen und Positionieren der Rückhalteausrüstung (16) der Stücke (8) gemäß der Geometrie und Größe der zu bearbeitenden Werkstücke (8), wobei sich die beweglichen Stangen (20) entlang der vorherrschenden Längsrichtungen (X-X) erstrecken,
- Rückhalteausrüstung (16),
- zumindest einen Werkzeugkopf (24), der konfiguriert ist in der Lage zu sein, die Rückhalteausrüstung (16) aufzunehmen und sie mit den beweglichen Stangen (20) zu verbinden, und der konfiguriert ist, zu bearbeitende Stücke (8) der Rückhalteausrüstung (16) zuzuführen.

2. Bearbeitungszentrum (4) nach Anspruch 1, wobei der Werkzeugkopf (24) durch eine mobile Portalstruktur (28) gestützt bzw. getragen ist.

3. Bearbeitungszentrum (4) nach Anspruch 1 oder 2, wobei die Rückhalteausrüstung (16) mit Antriebsmitteln in Bezug auf die zuordenbaren beweglichen Stangen (20) versehen ist, um in der Lage zu sein, sich entlang der vorherrschenden Längsrichtungen (X-X) zu verschieben.

4. Bearbeitungszentrum (4) nach einem der Ansprüche 1 bis 3, wobei die beweglichen Stangen (20) mit individuellen und voneinander unabhängigen Antriebsmitteln versehen sind, um in der Lage zu sein, sich entlang der Querrichtungen (Y-Y) zu verschieben, und zwar senkrecht zu den vorherrschenden Längsrichtungen (X-X).

5. Bearbeitungszentrum (4) nach einem der Ansprüche 1 bis 4, wobei die Rückhalteausrüstung (16) dezentriert bzw. außermittig in Bezug auf eine Mittellinie (M-M) der beweglichen Stangen (20) ist, und zwar parallel zu den vorherrschenden Längsrichtungen (X-X).

6. Bearbeitungszentrum (4) nach einem der Ansprüche 1 bis 5, wobei die Rückhalteausrüstung (16) zumindest teilweise von den beweglichen Stangen (20) entlang Querrichtungen (Y-Y) freitragend ist, und zwar senkrecht zu den vorherrschenden Längsrichtungen (X-X).

7. Bearbeitungszentrum (4) nach einem der Ansprüche, wobei die Rückhalteausrüstung (16) zumindest einen Saugnapf unterschiedlicher Formen und Höhen und/oder zumindest einen Schraubstock und/oder zumindest eine Verschachtelungs- bzw. Aufnahmeplatte und/oder oder zumindest eine Endkappe umfasst.

8. Bearbeitungszentrum (4) nach einem der Ansprüche 1 bis 7, wobei die Rückhalteausrüstung (16) einen Schlitten (32), der mit einer zugehörigen beweglichen Stange (20) assoziiert bzw. verbunden ist, und einen austauschbaren Abschnitt (36) umfasst, der abnehmbar mit dem Schlitten (32) assoziiert bzw. verbunden und konfiguriert ist, eine Art von zu bearbeitendem Werkstück (8) festzuklemmen bzw. einzuspannen, wobei der Schlitten (32) und der austauschbare Abschnitt (36) durch mechanische und pneumatische Verbindungsmittel (40) miteinander verbunden sind.

9. Bearbeitungszentrum (4) nach Anspruch 8, wobei der Schlitten (32) mit Antriebsmitteln in Bezug auf die zuordenbaren beweglichen Stangen (20) versehen ist.

10. Bearbeitungszentrum (4) nach einem der Ansprüche 8 bis 9, wobei die mechanischen und pneumatischen Verbindungsmittel (40) eine Mehrzahl von Kugeln (44) und kalibrierten Stütz- bzw. Trägerpunkten (48) umfassen, die konfiguriert sind, eine ordnungsgemäße mechanische Zentrierung und pneumatische Verbindung zwischen dem Schlitten (32) und dem austauschbaren Abschnitt (36) bereitzustellen.

11. Bearbeitungszentrum (4) nach einem der Ansprüche 8 bis 10, wobei die mechanischen und pneumatischen Verbindungsmittel (40) mit einer Druckluftquelle des Bearbeitungszentrums (4) verbunden sind, um die Kugeln (44) gegen eine geneigte Fläche bzw. Oberfläche (52) zu drücken, die gegen die kalibrierten Stütz- bzw. Trägerebenen (48) gespannt ist.

12. Bearbeitungszentrum (4) nach einem der Ansprüche 8 bis 11, wobei die mechanischen und pneumatischen Verbindungsmittel (40) Pneumatik-/Vakuum-Verbindungspunkte umfassen, um Pneumatik- und Vakuumversorgungseinrichtungen des Schlittens (32) mit den austauschbaren Abschnitten (36) zu verbinden.

13. Bearbeitungszentrum (4) nach Anspruch 12, wobei die Pneumatik-/Vakuum-Verbindungspunkte aus Gummi bestehen.

14. Bearbeitungszentrum (4) nach einem der Ansprüche 8 bis 13, wobei die mechanischen und pneumatischen Verbindungsmittel (40) einen Austauschbarer-Abschnitt-Vorhandensein-Sensor (36) umfassen.

## Revendications

1. Centre d'usinage (4) pour usiner des pièces (8) de bois comprenant :
- au moins une tête de machine (12) équipée d'au moins un outil approprié pour réaliser un usinage mécanique sur lesdites pièces (8),
- un magasin (14) d'équipements de retenue (16) des pièces (8) durant l'usinage de celles-ci par ladite au moins une tête de machine (12),
- des barres mobiles (20) pour supporter, déplacer et positionner lesdits équipements de retenue (16) des pièces (8) conformément à la géométrie et à la taille des pièces (8) à travailler à usiner, lesdites barres mobiles (20) s'étendant le long de directions longitudinales prévalentes (X-X),
- des équipements de retenue (16),
- au moins une tête d'outillage (24) configurée pour être capable de prendre lesdits équipements de retenue (16) et les réunir avec lesdites barres mobiles (20) et configurée pour apporter des pièces (8) à usiner auxdits équipements de retenue (16).

2. Centre d'usinage (4) selon la revendication 1, dans lequel ladite tête d'outillage (24) est supportée par une structure de portique mobile (28).

3. Centre d'usinage (4) selon la revendication 1 ou 2, dans lequel lesdits équipements de retenue (16) sont dotés de moyens d'entraînement par rapport aux barres mobiles (20) pouvant être associées, de manière à être capables d'une translation le long desdites directions longitudinales prévalentes (X-X).

4. Centre d'usinage (4) selon l'une quelconque des revendications 1 à 3, dans lequel lesdites barres mobiles (20) sont dotées de moyens d'entraînement individuels et mutuellement indépendants, de manière à être capables d'une translation le long de directions transversales (Y-Y), perpendiculaires auxdites directions longitudinales prévalentes (X-X).

5. Centre d'usinage (4) selon l'une quelconque des revendications 1 à 4, dans lequel les équipements de retenue (16) sont décentrés par rapport à une ligne centrale (M-M) des barres mobiles (20), parallèle auxdites directions longitudinales prévalentes (X-X).

6. Centre d'usinage (4) selon l'une quelconque des revendications 1 à 5, dans lequel les équipements de retenue (16) sont au moins partiellement en porte-à-faux par rapport aux barres mobiles (20), le long de directions transversales (Y-Y) perpendiculaires auxdites directions longitudinales prévalentes (X-X).

7. Centre d'usinage (4) selon l'une quelconque des revendications, dans laquelle les équipements de retenue (16) comprennent au moins une ventouse de différentes formes et hauteurs et/ou au moins un étau et/ou au moins une plaque d'emboîtement et/ou au moins un embout.

8. Centre d'usinage (4) selon l'une quelconque des revendications 1 à 7, dans lequel les équipements de retenue (16) comprennent un chariot (32), associé à une barre mobile (20) correspondante, et une partie interchangeable (36), associée de manière détachable au chariot (32) et configurée pour bloquer un type de pièce (8) à usiner, ledit chariot (32) et ladite partie interchangeable (36) étant reliés l'un à l'autre par des moyens de liaison mécanique et pneumatique (40).

9. Centre d'usinage (4) selon la revendication 8, dans lequel le chariot (32) est doté de moyens d'entraînement par rapport aux barres mobiles (20) pouvant être associées.

10. Centre d'usinage (4) selon l'une quelconque des revendications 8 ou 9, dans lequel les moyens de liaison mécanique et pneumatique (40) comprennent une pluralité de billes (44) et des points de support calibrés (48) configurés pour fournir un centrage mécanique et une liaison pneumatique corrects entre le chariot (32) et la partie interchangeable (36).

11. Centre d'usinage (4) selon l'une quelconque des revendications 8 à 10, dans lequel les moyens de liaison mécanique et pneumatique (40) sont reliés à une source d'air comprimé du centre d'usinage (4), de manière à pousser lesdites billes (44) contre une surface inclinée (52) qui est bloquée contre les plans de support calibrés (48).

12. Centre d'usinage (4) selon l'une quelconque des revendications 8 à 11, dans lequel les moyens de liaison mécanique et pneumatique (40) comprennent des points de liaison pneumatique/à vide de manière à relier du matériel pneumatique et à vide du chariot (32) aux parties interchangeables (36).

13. Centre d'usinage (4) selon la revendication 12, dans lequel lesdits points de liaison pneumatique/à vide sont faits de caoutchouc.

14. Centre d'usinage (4) selon l'une quelconque des revendications 8 à 13, dans lequel les moyens de liaison mécanique et pneumatique (40) comprennent un capteur de présence de partie interchangeable (36).
